# EUROPEAN PATENT APPLICATION

(11) **EP 2 665 021 A1**
(43) Date of publication of application: **20.11.2013**
(21) Application number: 13166328.8
(22) Date of filing: 02.05.2013
(51) Int. Cl.: G06Q 10/02, G07C 9/00, G07C 11/00

(54) **Queuing system**

(30) Priority: 14.05.2012 GB 201208408
(71) Applicant: Elyas, Zoher, Harrow Middlex HA4 5HX (GB)
(72) Inventor: Elyas, Zoher, Harrow Middlex HA4 5HX (GB)
(74) Representative: Kensett, John Hinton

(57) **Abstract**

A system for allocating places in a queue is disclosed, comprising means for a user to enter a personal token or code, eg by scanning in an image; means for associating that token or code with a place in a queue and means for alerting each person in turn as they reach a predetermined position in the queue.

## Description

This invention relates to a queuing system.

Queuing systems are often used in retail and service environments where a limited number of operators have to serve a number of customers one by one. Some examples include medical environments where a queuing system may be in force for patients awaiting blood tests or other analysis; pharmacies; banks or other financial institutions; fresh food counters in supermarkets; transport offices and many other environments.

Typically, a ticket system is used in which as they arrive each customer or patient takes a sequentially numbered ticket from a ticket dispenser. A centralised system then displays sequential numbers as operators become available and customers wait their turn until their particular ticket number is displayed, at which time they can be served.

The paper tickets are then discarded.

Such a system is wasteful of paper and is also inflexible in that if a person looses their place in the queue, perhaps by having to visit the toilet at the wrong moment, or indeed loses their ticket, they may lose their place in the queue and have to wait much longer than is desirable. The tickets are usually thermally printed in addition and this type of printing can use a considerable amount of power. In addition, some thermal paper contains bisphenol A which some authorities have termed a toxic substance.

Furthermore, users often abuse the system by taking more than one tickets. This is wasteful of both paper and time, since an operator has to wait for non-existent ticket-takers.

According to the present invention there is provided a system for allocating places in a queue, comprising means for a user to enter a personal token or code; means for associating that token or code with a place in a queue and means for alerting each person in turn as they reach a predetermined position in the queue.

Preferably, each entered token or code is associated with a queue number and that number is displayed and/or otherwise presented as the person associated with the token or code reaches the predetermined position in the queue.

The token may be an image which is scanned.

By scanning an image, or entering a code, a paper ticket need not be issued, thus saving paper. In addition, the problem of persons taking multiple tickets can be reduced.

Biometric data is not used. The image is simply a scanned image. Even if it contains biometric data (for example, from a driving licence or an identity card) this is not used as biometric data. The scanned image is simply used as a token to identify the person presenting the token.

Preferably, if a person who has entered the token or a code re-presents the same token or code, means can be provided for reacting to that by, for example, altering the priority and/or position of that person in the queue.

Embodiments of the invention will now be described, by way of example only, with reference to the accompanying drawings, in which:
Figure 1 shows schematically a queue place allocation apparatus and;
Figure 2 shows schematically a scanner.

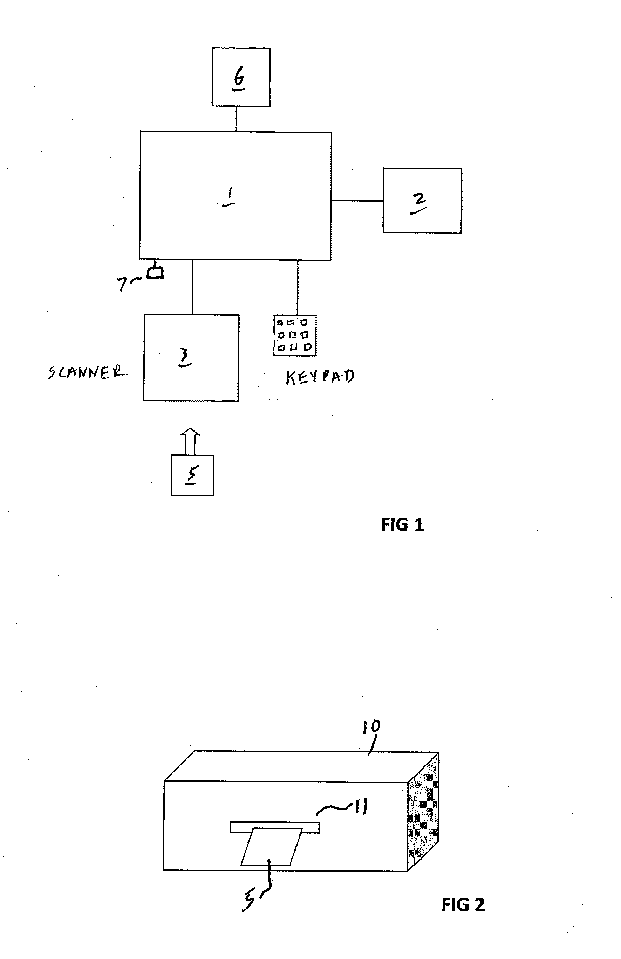

Referring to Figure 1, an apparatus for allocating places in a queue is shown schematically. This may be used, for example, in banks, pharmacies, post offices, hospitals or other medical environments, shops, police stations or any other location where customer, patients or users of a service are allocated a place in a queue as they enter and, as operatives become available, displays information calling the relevant person to a service point or other location.

The apparatus comprises a central control apparatus 1 connected to a display that may display a number or any other information representative of a person who has reached the front of the queue. This may be a simple LED type display or any other suitable display. There may of course be more than one display and a separate display may be provided at, or in association with, each service point such that a person a called to whichever service point becomes free when that person is at the front of a queue. In some embodiments, the display need not be viewable by the person; it may be used to alert operators who in turn call out a 'ticket' number.

The apparatus also includes a scanner 3 which may be any type of scanner, for scanning sheets, cards (eg business cards) or otherwise and which is connected to the central apparatus 1 to transmit a scanned image thereto.

The apparatus may also include a keypad 4, although in some embodiments these need not be provided. This includes a number of alphanumerical or numerical keys (not shown) such that a user can choose, instead of or indeed in addition to scanning an item of ID, to simply enter any desired code number into the system.

The figure also shows a sheet or card 5 to be scanned.

In addition, a further display 6 may be provided which is viewable by the operator or, alternatively, where there are a plurality of service stations each manned by one or more operators, a separate operator display 6 may be provided for each operator to use. Alternatively, a single display may be viewable by all the operators. This display may indicate the same information as the display 2 which is viewable by the user, but may alternatively or in addition also display the image scanned by the scanner and/or any code number input by a user at keypad 4.

Where the data entered is an image, the image may be displayed at display 2 instead of, or addition to, a queue number so that a person may determine that they are at the top of the queue by seeing their appropriate scanned image being displayed.

Use of the system will now be described.

As each person wishes to join a queue they select or create a token bearing an image. This may be an existing token or card the user has, such as a driving licence, business card or any other card bearing an image or other data they may possess. It may alternatively be a sheet, card or other medium on which they draw, either at the time or beforehand, any image, such as a simple image or any word or wording, or a combination of words and image. This token 5 is then placed upon or into the scanner 3 and the image upon it is scanned. The data is preferably not analysed or used for biometric purposes at all but the scanned image is sent to the control unit 1. In some embodiments, this then associates that image with a sequential queue number. If the user is the first user of the day or particular operating period then this may be number 1. If the user is the tenth person, then this may be number 10 and so on. This number may then be displayed to the user via a display 7 which may be provided at any convenient location or may be associated with the scanner 3.

If the user for some reason does not wish to scan an image, then in some embodiments they may alternatively enter any code number at the keypad 4. This can be any number chosen by them at the time. This will then be used to generate their sequential number in the queue as will the scanned image above.

As places become available, the system displays, at display 2 and perhaps also at display 6, the sequential number of the person who is now first in the queue. Alternatively, or additionally, it may display the scanned image. The relevant person can then attend a relevant operator.

In some embodiments, it may be found useful to display just a sequential number at external display 2 and for each operator to have displayed to him not only the number but the individual scanned image associated with that number. Thus, when a user attends that operator they can show the image the image they scan and thus prove they are the person who initially 'logged in'. In the same way, if a code is entered, the code will generally not be displayed on the public display 2 but may be displayed at an operator's display together with their sequential number such that the user can enter that pin code number either verbally at the operator point or on a separate keypad (not shown) associated with that point, again in order to prove the other person who initially logged on with that code.

The code may be restricted to a certain number of digits or may be of any number of digits chosen by the user.

Thus, in embodiments of the invention, no paper ticket is required. A user's 'ticket' essentially comprises the image they originally scanned or memory of the code they entered. Of course, both an image and a pin code may be used, if desired.

The system has several advantages if a user for some reason misses their turn or wishes to re-enter the queue. For example, if a user happens to need to visit the toilet or to make or receive a telephone call around the time they are be called for service, under existing ticket based systems they may lose their turn and then have to take another ticket. This will put them to the back of the queue. In embodiments of the present invention, their original scanned image and unique code can be stored so that if that user misses their turn for any reason and re-enters (by scanning or re-entering a code) the same data the system might prioritise them and perhaps place them in the next available place in the queue so that they do not have to go to the back of queue again. Similarly, as sometimes happens, a user may attend for service and then have to go to different place in the building, perhaps to fill in a form or have some tests done before returning to the same place for service again. By enabling storage of that person's scanned image and/or entered code when that person returns and enters the same information they can be given priority in the queue. Other changes in queue place, even putting it back, or the user's status in the queue, might also be made.

The system may be provided with means for deleting an image or code once that person has been seen by an operator if there is no reason for them to be seen again. It may also be provided with means for not allowing the same piece of information to be provided twice within a certain time period or within a certain number of places in the queue, thus preventing two persons from inadvertently entering the same code number or indeed scanned image. In cases where it is legitimate for a person to enter twice they may be able to enter another code number to show that this is genuine.

Figure 2 shows an example of a scanner which can be used for scanning cards, such as business cards or other cards. This contains a scanning body 10 including a slot 11 into which a card 5 can be inserted. Note that in most embodiments no biometric data at all is extracted from any scanned image. The image is simply used as an image, even if it obtains data which might be used biometrically (for example if the image is of a driving licence). The image will therefore generally be stored in a simple image format such as a bitmap, pdf or other format.

## Claims

1. A system for allocating places in a queue, comprising means for a user to enter a personal token or code; means for associating that token or code with a place in a queue and means for alerting each person in turn as they reach a predetermined position in the queue.

2. A system as claimed in Claim 1, wherein each entered token or code is associated with a queue number and that number is displayed or otherwise presented to the users as the person associated with that token or code reaches the predetermined position in the queue.

3. A system as claimed in Claim 1 or Claim 2, wherein the token derives from an image which is scanned.

4. A system as claimed in any preceding claim, including means for a user to scan an image and for using the scanned image as the token.

5. A system as claimed in any preceding claim, wherein, even if a token bears data that may be used biometrically, no biometric information is used as such.

6. A system as claimed in any preceding claim, including means for displaying, as a person reaches the predetermined position in the queue, the token to a service operative or service point such that the user can show data representative of the token for comparison.

7. A system as claimed in any preceding claim, including means such that if an identical token or code is represented, the priority or other status of the queue position of a person associated with that token or code may be altered.

8. A system as claimed in any preceding claim, including a keypad for entering an alphanumeric or numeric code.

9. A system as claimed in any preceding claim, including one or more displays for displaying the image on a token and/or the sequential number as a user reaches the predetermined position in queue.

10. A system as claimed in any preceding claim, wherein the predetermined position in the queue is first.

11. A method of allocating places in a queue, comprising enabling a user to scan an image and/or enter a chosen code; allocating that image or code with a place in a queue and alerting each person in turn as they reach a predetermined position in the queue.

12. A method as claimed in Claim 11, wherein no biometric data is used, even if the image contains data that could be used biometrically.

13. A method as claimed in Claim 11 or Claim 12, wherein if a user re-scans the image, or re-enters the code, the position, priority and/or status of that person in the queue may be altered.

14. A method as claimed in Claim 13, wherein the position of that person in the queue may be raised higher than their sequential position of entry if the same image or code is rescanned or re-entered.

15. An apparatus or method as claimed in any preceding claim, wherein no physical ticket is produced.
